# EUROPEAN PATENT SPECIFICATION

(11) **EP 2 341 187 B1**
(45) Date of publication and mention of the grant of the patent: **20.09.2017**
(21) Application number: 10195422.0
(22) Date of filing: 16.12.2010
(51) Int. Cl.: A01G 9/02, E04C 1/39, E01F 8/02

(54) **Wall for a buiding built up from a plurality of building blocks**
Aus mehreren Gebäudeblöcken für ein Gebäude gebaute Wand
Mur pour bâtiment construit à partir de plusieurs blocs de construction

(30) Priority: 05.01.2010 NL 2004060
(43) Date of publication of application: 06.07.2011
(73) Proprietor: Meyer Viol Beheer B.V., 6226 WR Maastricht (NL)
(72) Inventor: Meyer Viol, Edwin Frans, 6226 WR, Maastricht (NL)
(74) Representative: V.O.

(56) References cited:
- EP-A1- 0 013 535
- WO-A1-2008/017105
- FR-A3- 2 506 366
- US-A- 4 229 123
- US-A- 4 379 659
- US-A- 5 072 566
- US-A- 5 913 790
- US-A1- 2005 044 781
- US-A1- 2005 279 046

## Description

The invention relates to a green wall for a building. Green facades are known as curtain wall, with panels configured to carry plant growth. In a known construction, on a heavy steel framework, strips from recycled plastic are arranged, from which panels carrying plant growth are suspended. The steel framework is to be attached to an existing wall of a building. The strips are mounted to the steel framework with self-tapping screws. The panels are fixed through screws that engage in the strips. The panels have small plastic trays of a depth of approximately 6 cm. In the trays a recess is provided, through which excess rainwater drains. The planting is formed by pre-grown perennial plants and types of grass. At the corners of this curtain wall, there is no connection between the panels, and the growth needs to ensure that with the passing of time open spaces will not be visible anymore. Water and nutrient supply is controlled with a drip line, which is suspended at 50 cm intervals on a horizontal level. With the above-described system, projects have been carried out in recent years in Canada, Mexico and England.

A disadvantage of the known system is that it makes a somewhat unnatural impression, akin to a perfect lawn that has been placed vertically. This effect is caused to a considerable extent by the limited choice of suitable plants, such as as Ferns, that can be reliably sustained under the artificial conditions being offered. Nonetheless, in architecture there remains a need for bringing together natural growth and constructional elements to be able to benefit from the inherent insulating properties of natural material. It then remains important, however, that an aesthetically appealing entity can be achieved to promote possibly widespread acceptance.

Further, it can be a disadvantage of these known green walls that they consist of a conventional structural building construction with a separately arranged curtain wall configured for receiving the planting. As a result, on the one hand the intended environmental advantages do not come fully into play, but also the overall constructional effort is unduly complex and costly.

US 2005/279046 discloses a retaining wall that can house plants in its building blocks, whereas WO 2008/017105 discloses a wall for a building comprising the features of the preamble of claim 1.

Accordingly, it is an object of the present invention to eliminate or ameliorate at least one of the disadvantages of the prior art. It is also an object of the present invention to provide alternative solutions that can be implemented in a simpler manner and moreover can be made comparatively inexpensively. Alternatively, it is an object of the invention to provide to the public an at least useful option.

To this end, the invention provides a building wall built up from building blocks, as defined in one or more of the appended claims.

An important advantage of the building blocks according to the invention is that they can be assembled into a wall in the usual manner, and that no interruptions are formed at the corners. Maintenance of the growth can be automated in an efficient manner by integrating irrigation facilities in the wall. Other advantages will become apparent from the following description.

The invention will be set out hereinafter on the basis of an exemplary embodiment, with reference to the accompanying drawing figures, in which:
Fig. 1A is a perspective representation of a building block for a building wall according to the invention;
Fig. 1B is a similar representation to Fig. 1A, but partly cutaway to make the inside visible;
Fig. 2 shows a part of a from building wall according to the invention built up from building blocks; and
Fig. 3A is a perspective isometric view, similar to Fig. 1A, of a variation of building block for a building wall according to the invention;
Fig. 3B is a perspective isometric view of the building block of Fig. 3A, but seen from below; and
Fig. 4 is a perspective isometric view, similar to Figs. 1A and 3A, of yet a further modified building block for a building wall according to the invention.

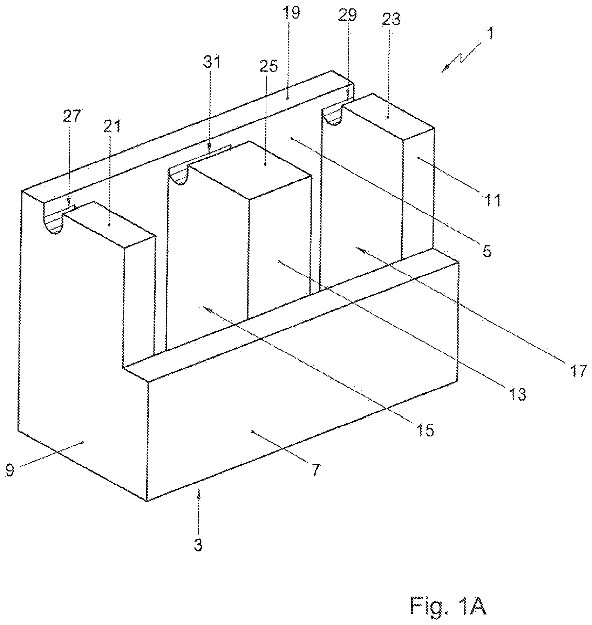

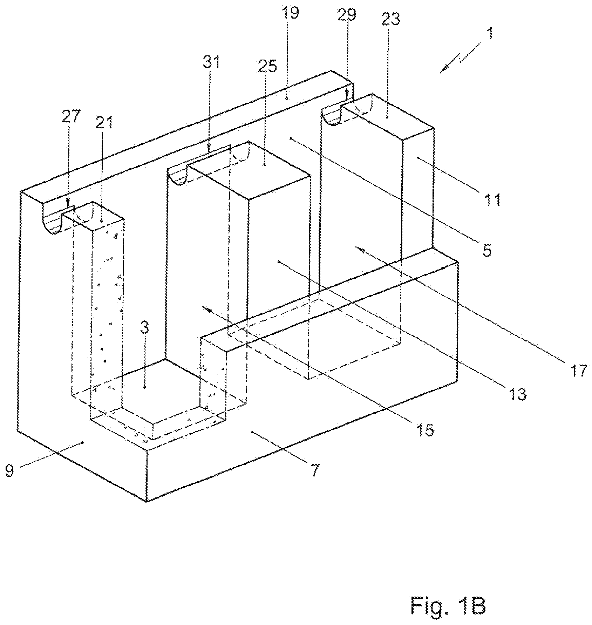

Figs. 1A and 1B show a substantially rectangular building block 1. This building block 1 has a largely hollow form, which is defined by a bottom 3, a rear wall 5, a front wall 7 and at least two mutually parallel first and second sidewalls 9, 11. The rear wall 5 and the front wall 7 are also parallel to each other and are each directed substantially perpendicular to both a plane in which the bottom 3 extends and the planes in which the respective first and second sidewalls 9, 11 extend. Further, it can be derived from Figs. 1A and 1B that the front wall 7 has a considerably lower height than the rear wall 5, so that a forwardly directed opening is left free.

Optionally, the building block, as shown in Figs. 1A and 1B, may be optionally provided with a partition 13, so that the opening left free by the front wall 7 gives access to a first space 15 and a second space 17. In these first and second spaces 15, 17, a rooting material for plants can be received, which will be addressed in more detail hereinafter.

An upper side 19, of the rear wall 5, forms, together with the tops 21, 23 of the first and second sidewalls 9, 11, an upper bearing surface. When the optional partition 13 is provided, an upper surface 25 thereof also functions as part of the upper surface of the building block 1.

The thus formed building block 1 can be manufactured from any material suitable for constructional applications, but in particular concrete is used as a material.

It is further identifiable in Figs. 1A and 1B that the first sidewall 9, the partition 13 and the second sidewall 11 are each provided with upwardly open first, second, and third recesses 27, 29, and 31. These recesses are provided for a purpose that will be elucidated in more detail hereinbelow.

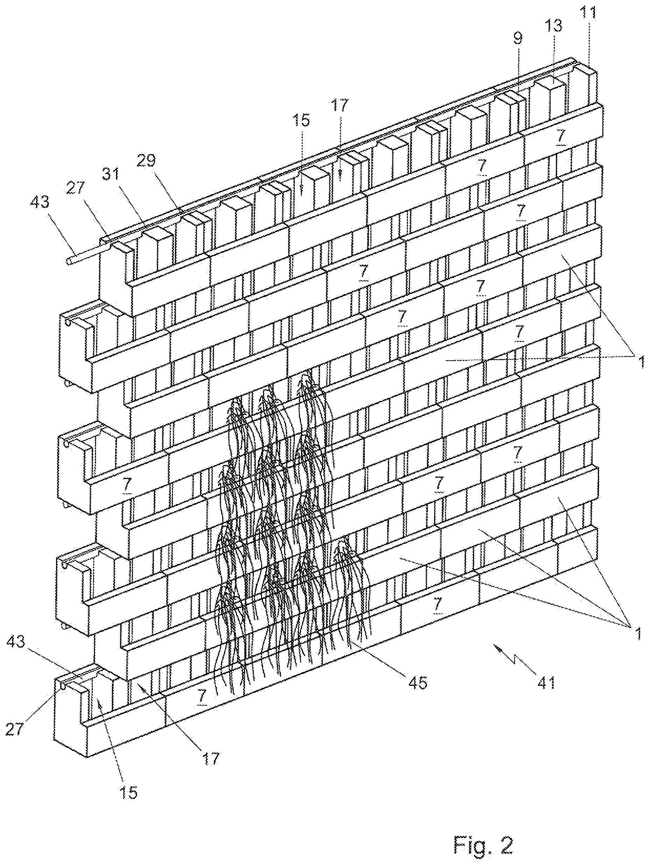

A building wall 41 built up from a large number of blocks 1 is shown in Fig. 2. This wall 41 can serve wholly independently as the bearing wall of a building. The building blocks 1 may then, as shown in Fig. 2, be stacked in stretcher bond and be bonded by mortar or grout. Irrigation conduits 43 are in each case arranged in the first, second and third recesses 27, 29, and 31 which are in one line. In a portion of the wall 41, in Fig. 2, it can be seen how planting or growth 45 grows outside through the forwardly directed openings of the individual first and second spaces 15, 17 and can thereby overgrow the front walls 7. To that end, in the first and second spaces 15, 17 of the individual building blocks 1, a rooting substance or substrate has initially been provided. Such rooting materials can be formed by soil, potting compost or artificially obtained or processed natural materials, such as coir fiber material or glass wool. Various suitable types of rooting material are known in horticulture. The following can be mentioned as possibly suitable forms of vegetation: plants, grasses and sedum. Especially crops naturally occurring on slopes will give the wall a natural and pleasing look.

Also suitable are Hostas, Hederas, Bergenias and Ferns. An important aspect is that the vegetation must be sound and lasting. With the aid of the irrigation arranged, longevity can be favorably influenced, so that maintenance and replacement of the planting can be limited to a minimum.

Needless to say, the planting can also be varied per building block, or per group of building blocks.

The bottom 3 of the building blocks 1 can be closed or porous. Also, in one or more of the upstanding rear, front or side walls 5, 7, 9, 11 discharge openings may be provided to drain an excess of water, or irrigation.

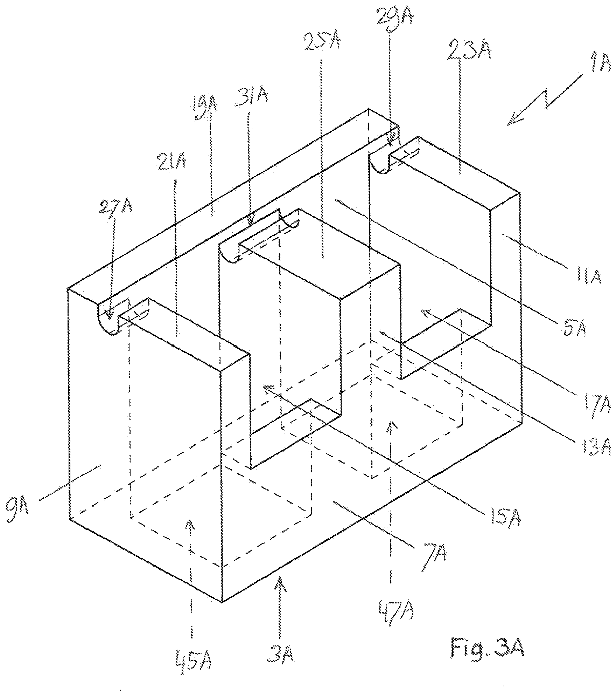

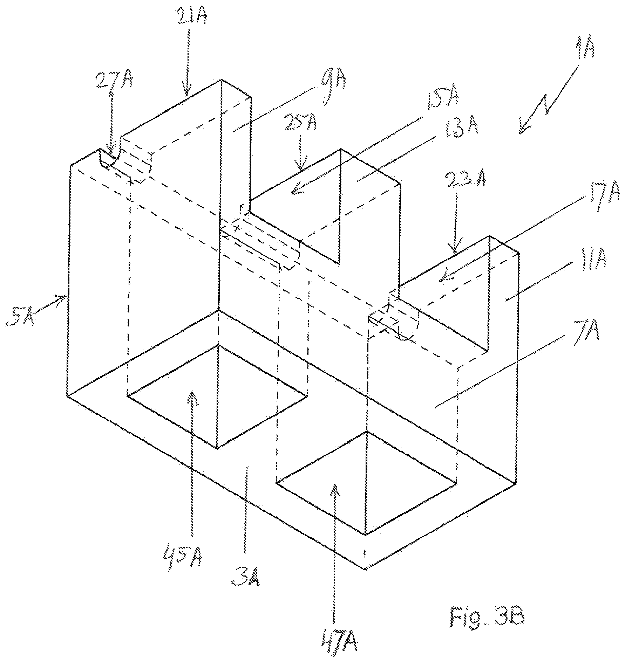

In a variation illustrated in Figures 3A and 3B the bottom of the building block 3A can be left entirely open, not only to improve drainage, but also to allow the rooting material to form continuous columns. Such continuous columns allow the rooting material to be inserted in the form of pre-compacted rods, rather than individually in each and all of the first and second spaces 15A, 17A. As seen in Fig. 3A the building block 1A has similar elements as the building block 1 of Figs 1A and 1B, each indicated by similar reference numerals with the addition of a suffix "A". One noticeable variation in the building block 1A of Figs 3A and 3B is that each of the first and second side walls 9A, 11A, as well as the optional partition wall 13A extend over the top edge of the front wall 7A, to form a front wall 7A that is only partially lower than the rear wall 5A, but still define openings to the first and second spaces 15A, 17A, respectively. The top surfaces 21A, 23A, 25A of the first, second and partition walls do not join the top side 19A of the rear wall 5A, but are separated there from by aligned first, second and third upwardly open recesses 27A, 29A, 31A, respectively. The aligned recesses 27A, 29A, 31A prove accommodation for an irrigation conduit, such as indicated by reference numeral 43 in Fig. 2. The bottom surface 3A, as best seen in Fig. 3B is provided with first and second openings 45A, 47A to allow the rooting material to extend between the first and second spaces 15A, 17A of adjoining building blocks in an assembled building wall 41 as shown in Fig. 2. It goes without saying that when the building block 1A would not be provided with the optional partition wall 13A, then a single opening in the bottom 3A would suffice to communicate with a then singular internal space.

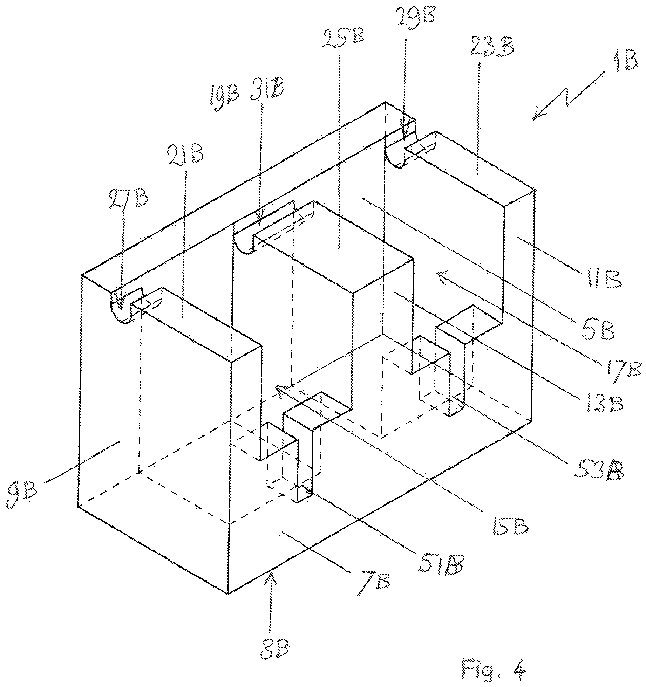

Referring further to Fig. 4 a further modification of building block 1B according to the invention is illustrated. Again similar reference numerals are used to identify elements similar to the other embodiments, except for a suffix "B", which is associated with the variation of Fig. 4. The modification essentially includes first and second slots 51B, 53B extending downwardly from the top edge of the front wall 7B at the location where the front wall provides access to the first and second spaces 15B, 17B, respectively. While the embodiment of building block 1B of Fig. 4 is shown with a substantially closed (or porous) bottom 3B, the modification of the first and second slots 51B, 53B can also be used in combination with an open bottom 3A as shown in Figs. 3A and 3B. Such additional slots 51B, 53B can be useful to allow plant growth to more fully cover the front surface defined by the front wall 7, 7A, 7B of the building block, and can moreover improve the bond between the rooting material and the building wall 41 assembled from the building blocks, such as 7B. Furthermore the slots 51B, 53B can also be used to prevent soaking of the plants, for example when the wall is exposed to heavy rains.

Thus, the invention provides a wall for a building (41), assembled from a plurality of building blocks, arranged in layers. Each building block (1, 1A, 1B) has a substantially rectangular shape and defines six, pair wise parallel, outer surfaces. The building block (1, 1A, 1B) is provided with a bottom (3, 3A, 3B), a rear wall (5, 5A, 5B), a front wall (7, 7A, 7B), a first sidewall (9, 9A, 9B) and a second sidewall (11, 11A, 11B). These walls jointly bound an internal hollow space (15, 17; 15A, 17A; 15B, 17B), which is suitable for receiving a rooting material and planting. The front wall (7, 7A, 7B) is at least partially lower than the rear wall (5, 5A, 5B). An irrigation conduit is included in the assembled wall (41) within recesses (27, 29, 31; 27A, 29A, 31A; 27B, 29B, 31B) in the building blocks (1, 1A, 1B) and at least in a number of building blocks rooting material is arranged with a planting cooperating therewith.

It is believed that the construction and the operation of the present invention are readily apparent from the foregoing description. The invention is not limited to any embodiment described herein and, within the ability of those skilled in the art, alterations are possible which are understood to be within the scope of the protection. Also, all kinematic inversions are understood to be within the scope of protection of the present invention. Expressions such as "consisting of", when used in this description or the appended claims, should be construed not as an exhaustive enumeration but rather in an inclusive sense. Expressions such as: "means for ..." should be read as: "component configured for ..." or "member constructed to..." and should be construed to additionally include all equivalents of the structures described. The use of expressions such as: "critical", "advantageous", "desired"', et cetera, is not intended to limit the invention. Moreover, also features that are not specifically or expressly described or claimed may be additionally included in the construction according to the present invention without departing from the scope of protection.

## Claims

1. A wall (41) for a building, built up from a plurality of building blocks (1; 1A; 1B), arranged in layers, each building block (1; 1A; 1B) having a substantially rectangular shape, which defines six pairwise parallel outer surfaces and which is provided with a bottom (3; 3A; 3B), a rear wall (5; 5A; 5B), a front wall (7; 7A; 7B), a first sidewall (9; 9A; 9B) and a second sidewall (11; 11A; 11B), which jointly bound an internal hollow space (15, 17; 15A, 17A; 15B, 17B), which is suitable for receiving a rooting substance, wherein the front wall (7; 7A; 7B) is at least partially lower than the rear wall (5; 5A; 5B), wherein upwardly open first and second recesses (27, 29; 27A, 29A; 27B, 29B) are provided in tops of the first (9; 9A; 9B) and second (11; 11A; 11B) sidewalls, wherein the front wall (7; 7A; 7B) is provided with at least one slot extending downwardly from a top edge of the front wall and communicating with the internal hollow space (15, 17; 15A, 17A; 15B, 17B), **characterized in that** said first and second recesses (27, 29; 27A, 29A; 27B, 29B) are configured to receive an irrigation conduit or line (43) therein, and at least one irrigation conduit or line (43) is locked between a pair of successive layers of building blocks.

2. A building wall (41) according to claim 1, wherein an upper side of the building block (1; 1A; 1B) is defined by an upper side (19; 19A) of the rear wall (5; 5A; 5B) and tops (21, 23; 21A, 23A; 21B, 23B) of the first (9; 9A; 9B) and second (11; 11A; 11B) sidewalls.

3. A building wall according to claim 1, or 2, wherein between the first (9; 9A; 9B) and second (11; 11A; 11B) sidewalls of each building block a partition (13 ; 13A; 13B) is arranged, by which the internal hollow space (15, 17; 15A, 17A; 15B, 17B) is divided into a first (15; 15A; 15B) and a second (17; 17A; 17B) space.

4. A building wall (41) according to claim 3, wherein the partition (13; 13A; 13B) extends over the top edge of the front wall (7; 7A; 7B) from the bottom up to an upper side of the building block, as defined by an upper side (19; 19A) of the rear wall (5; 5A; 5B) and tops (21, 23; 21A, 23A; 21B, 23B) of the first and second sidewalls.

5. A building wall (41) according to claim 4, wherein an upwardly open third recess (31; 31A; 31B) is provided in a top (25; 25A; 25B) of the partition (13; 13A; 13B) of each building block.

6. A building wall (41) according to claim 5, wherein the first, second and third recesses (27, 29, 31; 27A, 29A, 31A; 27B, 29B, 31B) of each building block (1; 1A; 1B) are provided in line with each other and are configured to receive an irrigation conduit therein.

7. A building wall (41) according to one of claims 1 to 6, wherein the bottom (3; 3A; 3B) of each building block (1; 1A; 1B) is substantially closed.

8. A building wall (41) according to one of claims 1 to 6, wherein the bottom (3; 3A; 3B) of each building block (1; 1A; 1B) is provided with at least one opening (45A, 47A) communicating with the internal hollow space (15, 17; 15A, 17A; 15B, 17B).

9. A building wall (41) according to any one of the preceding claims, wherein the at least one irrigation conduit or line (43) is placed in upwardly open recesses (27, 29, 31; 27A, 29A, 31A; 27B, 29B, 31B) in an upper side of a lower one of the pair of successive layers of building blocks (1; 1A; 1B).

10. A building wall (41) according to any one of claims 1-9, wherein at least in a number of building blocks (1; 1A; 1B) a rooting substance is provided and a planting cooperating therewith.

## Patentansprüche

1. Wand (41) für ein Gebäude, gebaut aus mehreren Gebäudeblöcken (1; 1A; 1B), angeordnet in Schichten, jeder Gebäudeblock (1; 1A; 1B) mit einer im Wesentlichen rechteckigen Form, die sechs paarweise parallele Außenoberflächen definiert und die mit einem Boden (3; 3A; 3B), einer Rückwand (5; 5A; 5B), einer Vorderwand (7; 7A; 7B), einer ersten Seitenwand (9; 9A; 9B) und einer zweiten Seitenwand (11; 11A; 11B) versehen ist, die gemeinsam einen inneren Hohlraum (15, 17; 15A, 17A; 15B, 17B) begrenzen, der zum Aufnehmen einer Verwurzelungssubstanz geeignet ist, wobei die Vorderwand (7; 7A; 7B) mindestens teilweise niedriger ist als die Rückwand (5; 5A; 5B), wobei nach oben offene erste und zweite Vertiefungen (27, 29; 27A, 29A; 27B, 29B) in den Oberseiten der ersten (9; 9A; 9B) und zweiten (11; 11A; 11B) Seitenwände bereitgestellt sind, wobei die Vorderwand (7; 7A; 7B) mit mindestens einem Schlitz versehen ist, der abwärts von einer Oberkante der Vorderwand verläuft und mit dem inneren Hohlraum (15, 17; 15A, 17A; 15B, 17B) kommuniziert,
**dadurch gekennzeichnet, dass** die ersten und zweiten Vertiefungen (27, 29; 27A, 29A; 27B, 29B) konfiguriert sind, um darin eine Bewässerungsröhre oder -leitung (43) aufzunehmen, und mindestens eine Bewässerungsröhre oder -leitung (43) zwischen einem Paar aufeinanderfolgender Schichten von Gebäudeblöcken eingeschlossen ist.

2. Gebäudewand (41) nach Anspruch 1, wobei eine obere Seite des Gebäudeblocks (1; 1A; 1B) von einer Oberseite (19; 19A) der Rückwand (5; 5A; 5B) und Oberseiten (21, 23; 21A, 23A; 21B, 23B) der ersten (9; 9A; 9B) und zweiten (11; 11A; 11B) Seitenwände definiert wird.

3. Gebäudewand nach Anspruch 1 oder 2, wobei zwischen den ersten (9; 9A; 9B) und zweiten (11; 11A; 11B) Seitenwänden von jedem Gebäudeblock eine Trennwand (13; 13A; 13B) angeordnet ist, durch die der innere Hohlraum (15, 17; 15A, 17A; 15B, 17B) in einen ersten (15; 15A; 15B) und einen zweiten (17; 17A; 17B) Raum geteilt wird.

4. Gebäudewand (41) nach Anspruch 3, wobei die Trennwand (13; 13A; 13B) über die Oberkante der Vorderwand (7; 7A; 7B) von unten nach oben zu einer oberen Seite des Gebäudeblocks verläuft, wie von einer oberen Seite (19; 19A) der Rückwand (5; 5A; 5B) und Oberseiten (21, 23; 21A, 23A; 21B, 23B) der ersten und zweiten Seitenwände definiert.

5. Gebäudewand (41) nach Anspruch 4, wobei eine nach oben offene dritte Vertiefung (31; 31A; 31B) in einer Oberseite (25; 25A; 25B) der Trennwand (13; 13A; 13B) jedes Gebäudeblocks bereitgestellt ist.

6. Gebäudewand (41) nach Anspruch 5, wobei die ersten, zweiten und dritten Vertiefungen (27, 29, 31; 27A, 29A, 31A; 27B, 29B, 31B) von jedem Gebäudeblock (1; 1A, 1B) zueinander ausgerichtet bereitgestellt und ausgelegt sind, eine Bewässerungsleitung aufzunehmen.

7. Gebäudewand (41) nach einem der Ansprüche 1 bis 6, wobei der Boden (3; 3A; 3B) von jedem Gebäudeblock (1; 1A; 1B) im Wesentlichen geschlossen ist.

8. Gebäudewand (41) nach einem der Ansprüche 1 bis 6, wobei der Boden (3; 3A; 3B) von jedem Gebäudeblock (1; 1A; 1B) mit mindestens einer Öffnung (45A, 47A) versehen ist, die mit dem inneren Hohlraum (15, 17; 15A, 17A; 15B, 17B) kommuniziert.

9. Gebäudewand (41) nach einem der vorhergehenden Ansprüche, wobei die mindestens eine Bewässerungsröhre oder -leitung (43) in nach oben offenen Vertiefungen (27, 29, 31; 27A, 29A, 31A; 27B, 29B, 31B) in einer oberen Seite einer unteren des Paares aufeinanderfolgender Schichten von Gebäudeblöcken (1; 1A; 1B) platziert ist.

10. Gebäudewand (41) nach einem der Ansprüche 1-9, wobei mindestens in einer Anzahl von Gebäudeblöcken (1; 1A; 1B) eine Verwurzelungssubstanz und eine damit zusammenarbeitende Bepflanzung bereitgestellt ist.

## Revendications

1. Paroi (41) de construction, constituée de plusieurs blocs de construction (1 ; 1A ; 1B ;), agencés en couches, chaque bloc de construction (1 ; 1A ; 1B) ayant une forme sensiblement rectangulaire, qui définit six surfaces extérieures parallèles et qui est dotée d'un fond (3 ; 3A ; 3B), une paroi arrière (5 ; 5A ; 5B), une paroi avant (7 ; 7A ; 7B), une première paroi latérale (9 ; 9A ; 9B) et une seconde paroi latérale (11 ; 11A ; 11B), qui délimitent conjointement un espace intérieur creux (15, 17 ; 15A, 17A ; 15B, 17B), qui est adapté pour recevoir une substance d'enracinement, dans laquelle la paroi avant (7 ; 7A ; 7B) est au moins partiellement plus basse que la paroi arrière (5 ; 5A ; 5B), dans laquelle des premier et deuxième évidements (27, 29 ; 27A, 29A ; 27B, 29B) ouverts vers le haut sont agencés dans les parties supérieures des première (9 ; 9A ; 9B) et seconde (11 ; 11A ; 11B) parois latérales, dans laquelle la paroi avant (7 ; 7A ; 7B) est munie d'au moins une encoche s'étendant vers le bas à partir du bord supérieur de la paroi avant et communiquant avec l'espace intérieur creux (15, 17 ; 15A, 17A ; 15B, 17B),
**caractérisée en ce que**
lesdits premier et second évidements (27, 29 ; 27A, 29A ; 27B, 29B) sont configurés pour recevoir dans ceux-ci une conduite ou ligne d'irrigation (43), et au moins une conduite ou ligne d'irrigation (43) est bloquée entre une paire de couches successives de blocs de construction.

2. Paroi de construction (41) selon la revendication 1, dans laquelle un côté supérieur du bloc de construction (1 ; 1A ; 1B) est défini par un côté supérieur (19 ; 19A) de la paroi arrière (5 ; 5A ; 5B) et des parties supérieures (21, 23 ; 21A, 23A ; 21B, 23B) des première (9 ; 9A ; 9B) et seconde (11 ; 11A ; 11B) parois latérales.

3. Construction selon la revendication 1 ou 2, dans laquelle entre la première (9 ; 9A ; 9B) et la seconde (11 ; 11A; 11B) paroi latérale de chaque bloc de construction, une cloison (13 ; 13A ; 13B) est agencée, par laquelle l'espace intérieur creux (15, 17 ; 15A, 17A ; 15B, 17B) est divisé en un premier (15 ; 15A ; 15B) et un second (17 ; 17A ; 17B) espace.

4. Paroi de construction (41) selon la revendication 3, dans laquelle la cloison (13 ; 13A ; 13B) s'étend au-dessus du bord supérieur de la paroi avant (7 ; 7A ; 7B) depuis le fond jusqu'à un côté supérieur du bloc de construction, comme défini par un côté supérieur (19 ; 19A) de la paroi arrière (5 ; 5A ; 5B) et les parties supérieures (21, 23 ; 21A, 23A ; 21B, 23B), des première et seconde parois latérales.

5. Paroi de construction (41) selon la revendication 4, dans laquelle un troisième évidement ouvert vers le haut (31 ; 31A ; 31B) est agencé dans la partie supérieure (25 ; 25A ; 25B) de la cloison (13 ; 13A ; 13B) de chaque bloc de construction.

6. Paroi de construction (41) selon la revendication 5, dans laquelle les premier, deuxième et troisième évidements (27, 29, 31 ; 27A, 29A, 31A ; 27B, 29B, 31B) de chaque bloc de construction (1 ; 1A ; 1B) sont agencés en ligne les uns avec les autres et sont configurés pour recevoir dans ceux-ci une conduite d'irrigation.

7. Paroi de construction (41) selon l'une quelconque des revendications 1 à 6, dans laquelle le fond (3 ; 3A ; 3B) de chaque bloc de construction (1 ; 1A ; 1B) est sensiblement fermé.

8. Paroi de construction (41) selon l'une quelconque des revendications 1 à 6, dans laquelle le fond (3 ; 3A ; 3B) de chaque bloc de construction (1 ; 1A ; 1B) est muni d'au moins une ouverture (45A, 47A) communiquant avec l'espace intérieur creux (15, 17 ; 15A, 17A ; 15B, 17B).

9. Paroi de construction (41) selon l'une quelconque des revendications précédentes, dans laquelle la au moins une conduite ou ligne d'irrigation (43) est placée dans des évidements ouverts vers le haut (27, 29, 31 ; 27A, 29A, 31A ; 27B, 29B, 31B) dans un côté supérieur d'une couche inférieure de la paire de couches successives de blocs de construction.

10. Paroi de construction (41) selon l'une quelconque des revendications 1 à 9, dans laquelle, au moins dans plusieurs blocs de construction (1 ; 1A ; 1B), est agencée une substance d'enracinement et une plante complémentaire de celle-ci.
